# EUROPÄISCHE PATENTSCHRIFT

(11) **EP 3 513 084 B1**
(45) Veröffentlichungstag und Bekanntmachung des Hinweises auf die Patenterteilung: **21.07.2021**
(21) Anmeldenummer: 17748471.4
(22) Anmeldetag: 03.08.2017
(51) Int. Cl.: F16C 11/06

(54) **KUGELZAPFEN**
BALL STUD
PIVOT À ROTULE

(30) Priorität: 14.09.2016 DE 102016217534
(43) Veröffentlichungstag der Anmeldung: 24.07.2019
(73) Patentinhaber: ZF Friedrichshafen AG, 88046 Friedrichshafen (DE)
(72) Erfinder: LAMLA, Dirk, 49565 Bramsche (DE); GRÄBER, Jürgen, 32351 Stemwede (DE); MAEHLMANN, Dirk, 49377 Vechta (DE); NIENABER, Annette, 49439 Steinfeld (DE); OTTE, Jens, 49170 Hagen a. T.W. (DE); SCHILLER, Florian, 32351 Stemwede (DE)
(74) Vertreter: ZF Friedrichshafen AG
(86) Internationale Anmeldenummer: PCT/EP2017/069591
(87) Internationale Veröffentlichungsnummer: WO 2018/050352

(56) Entgegenhaltungen:
- JP-A- 2000 081 025
- JP-U- S62 162 416
- US-A- 3 401 963

## Beschreibung

Die Erfindung betrifft einen Kugelzapfen für ein Kugelgelenk gemäß Anspruch 1, ein Kugelgelenk nach Anspruch 4, ein Verfahren zur Herstellung eines Kugelgelenks nach Anspruch 6 sowie ein Fahrwerksbauteil nach Anspruch 8. Ein entsprechender Kugelzapfen ist aus der US 3 401 963 A bekannt. Hierbei weist ein Zapfen des Kugelzapfens einen Ringabschnitt auf. Der Ringabschnitt wird in ein Sackloch eingepresst, wobei das Sackloch einen Einsatz aufweist, der zugleich zu einer Verformung des Ringabschnittes führt.

Aus der JP 200 081025 A ist bekannt, einen Gewindeschaft eines Zapfens zum Ausbilden einer Gelenkkugel zu umspritzen bzw. zu umgießen. Anschließend wird die Gelenkkugel zum Ausbilden eines Gelenkgehäuses umspritzt bzw. umgossen.

Die JP S62 162416 U offenbart die Merkmale des Oberbegriffs von Anspruch 1, eine Gelenkkugel, die ein Sackloch ausbildet, wobei das Sackloch einen sich konisch verjüngenden Gelenkschaft abschnittsweise aufnimmt.

Aus dem Stand der Technik sind Fahrwerksbauteile in Bauform eines Lenkers oder einer Koppelstange bekannt, die endseitig jeweils ein Kugelgelenk aufweisen, um im Fahrwerk eines Fahrzeugs die Position zweier Bauteile kinematisch miteinander zu koppeln. Es ist weiterhin bekannt, ein solches Fahrwerksbauteil, beispielsweise einen Zweipunktlenker, in Hybridbauweise zu fertigen, worunter in diesem Zusammenhang ein kombinierter Materialeinsatz von Kunststoff und Metall zu verstehen ist. Verwiesen sei hierzu auf die DE 10 2010 041 791 A1.

Die an derartigen Fahrwerksbauteilen zum Einsatz kommenden Kugelgelenke weisen einen Kugelzapfen auf, der von einem Gelenkgehäuse gelenkbeweglich aufgenommen wird. Aus fertigungstechnischer Sicht handelt es sich bei dem Kugelzapfen oftmals um einen sogenannten gebauten Kugelzapfen, d. h. der Kugelzapfen weist einen Gelenkschaft und eine mit dem Gelenkschaft verbundene Gelenkkugel auf. Der Gelenkschaft ist in der Regel als ein im Wesentlichen längliches Bauteil ausgeführt, das an seinem der Gelenkkugel abgewandten Ende an ein zu koppelndes erstes Fahrwerksteil anbaubar ist. Am gegenüberliegenden Ende ist der Gelenkschaft mit der Gelenkkugel verbunden, wobei die Gelenkkugel dazu dient, den Kugelzapfen gelenkbeweglich gegenüber einem Gelenkgehäuse zu lagern, das wiederum an ein zweites Fahrwerksteil gekoppelt ist oder Teil dieses zweiten Fahrwerksteils ist.

Aus dem Stand der Technik ist es bekannt, Gelenkkugel und Gelenkschaft miteinander zu verschweißen, um so durch stoffschlüssiges Verbinden den Kugelzapfen herzustellen. Nachteilig daran ist, dass bei einem auf diese Weise hergestellten Kugelzapfen Maßnahmen zur Erhöhung der Verschleißfestigkeit und/oder Korrosionsbeständigkeit, wie insbesondere das Nitrocarburieren der Gelenkkugel nicht möglich sind, da der Schweißprozess nicht mit der Nitrocarburierung der Gelenkkugel kombinierbar ist. Beim Nitrocarburieren handelt es sich um ein thermo-chemisches Verfahren zum Anreichern der Randschicht der Gelenkkugel mit Stickstoff und Kohlenstoff, so dass eine Nitrierschicht entsteht, welche die Verschleißfestigkeit und die Korrosionsbeständigkeit der aus Stahl gefertigten Gelenkkugel erhöht.

Soll der Kugelzapfen zur Erzielung einer erhöhten Verschleißfestigkeit und/oder Korrosionsbeständigkeit eine nitrocarburierte Gelenkkugel aufweisen, so wird gemäß einer ebenfalls bereits für sich gesehen bekannten technischen Praxis eine bereits zuvor nitrocarburierte Gelenkkugel auf den Gelenkschaft aufgepresst. Damit sich dieses Fügeverfahren durchführen lässt, weist bei aus dem Stand der Technik bekannten Kugelzapfen die Gelenkkugel eine zentrale Durchgangsbohrung auf, die jeweils stirnseitig in eine auch als Polfläche bezeichnete Abflachung mündet. Die Gelenkkugeln weisen demnach zwei symmetrische Abflachungen (Polflächen) auf, wobei ein Abschnitt des Gelenkschafts in die Durchgangsbohrung der Gelenkkugel eingeführt und damit verpresst wird. Durch das Aufpressen der nitrocarburierten Gelenkkugel können insgesamt eine höhere Festigkeit sowie günstigere Geometrien des Kugelzapfens (höhere Auswinkelung möglich) erreicht werden.

Die aus dem Stand der Technik bekannten verpressten Kugelzapfen eignen sich jedoch nicht zum Einsatz an Kugelgelenken, bei denen das Gelenkgehäuse durch die Technik des Kunststoffumspritzens hergestellt ist. Beim Kunststoffumspritzen zur Herstellung von Kugelgelenken wird der Kugelzapfen in ein Gießwerkzeug eingelegt, anschließend wird die Gelenkkugel des Kugelzapfens teilweise mit einem Gussmaterial umgossen (insbesondere im Spritzgussverfahren), so dass nach Aushärten des Gussmaterials ein die Gelenkkugel aufnehmendes Gelenkgehäuse vorliegt. Bei den aus dem Stand der Technik vorbekannten Kugelzapfen mit stirnseitigen Polflächen an der Gelenkkugel würde eine solche Kunststoffumspritzung - nach dem Härten des Gussmaterials - eine gewünschte Zapfenbewegung (Schwenken um den Gelenkmittelpunkt) verhindern.

Es ist eine Aufgabe der vorliegenden Erfindung einen Kugelzapfen anzugeben, der hohen Anforderungen an Verschleißfestigkeit und Korrosionsbeständigkeit genügt, und der sich weiterhin für den Einsatz an einem durch ein Gussverfahren, insbesondere durch Kunststoffumspritzen hergestellten Kugelgelenk eignet. Dementsprechend sollen ein solches Kugelgelenk, ein diesbezügliches Herstellverfahren sowie ein Fahrwerksbauteil mit einem solchen Kugelgelenk angegeben werden.

Die genannte Aufgabe wird zunächst gelöst durch einen Kugelzapfen mit den Merkmalen des Anspruchs 1. Es handelt sich dabei um einen Kugelzapfen für ein Kugelgelenk, insbesondere zum Einsatz am Fahrwerk eines Fahrzeugs. Der Kugelzapfen weist erfindungsgemäß einen Gelenkschaft und eine mit dem Gelenkschaft verbundene Gelenkkugel auf und zeichnet sich dadurch aus, dass in der Gelenkkugel ein Sackloch ausgebildet ist, das den Gelenkschaft abschnittsweise aufnimmt.

Dabei wurde es zunächst als vorteilhaft erachtet, den Kugelzapfen aus zwei Komponenten zusammenzusetzen, wodurch ermöglicht wird, dass jede der Komponenten (Gelenkschaft und Gelenkkugel) bereits vor dem Verbinden in einen für den späteren betrieblichen Einsatz geeigneten Zustand beispielsweise in Bezug auf Bearbeitung und Oberflächengüte versetzt werden können. In Abkehr von aus dem Stand der Technik vorbekannten Kugelzapfen mit Durchgangsbohrung in der Gelenkkugel wurde erfindungsgemäß erkannt, dass sich das Fügeverfahren des Aufpressens auch durchführen lässt, wenn in der Gelenkkugel - statt einer Durchgangsbohrung - ein Sackloch, also eine einseitige Bohrung, ausgebildet ist. Die Ausbildung eines Sacklochs bietet den Vorteil, dass die Gelenkkugel auf ihrer der Öffnung des Sacklochs abgewandten Seite unterbrechungsfrei sphärisch ausgebildet sein kann. Die Gelenkkugel weist damit nicht nur eine höhere Festigkeit auf, sondern eignet sich vorteilhaft auch für die Herstellung eines Kugelgelenks durch Kunststoffumspritzen, da die dem Gelenkgehäuse zugewandte Seite der Gelenkkugel keine Polfläche, sondern eine durchgehend sphärische Oberfläche aufweist.

Der Gelenkschaft ist in das Sackloch der Gelenkkugel eingepresst. Damit wird ein Kraftschluss zwischen Gelenkschaft und Gelenkkugel geschaffen. Alternativ oder ergänzend könnte der Gelenkschaft mit der Gelenkkugel auf sonstige Weise, beispielsweise per Stoffschluss wie beispielsweise Kleben verbunden sein. Gemäß einer kinematischen Umkehr ist das Einpressen des Gelenkschafts in das Sackloch gleichzusetzen mit einem Aufpressen der Gelenkkugel auf den Gelenkschaft.

Zur Erzielung eines sicheren Kraftschlusses ist es zweckmäßig, dass sich das in der Gelenkkugel ausgebildete Sackloch von seiner (dem Gelenkschaft zugewandten) Öffnung ausgehend insbesondere konisch verjüngt, wobei ein am Gelenkschaft ausgebildeter Aufnahmeabschnitt eine zum Sackloch komplementäre Formgebung aufweist.

Damit der Kugelzapfen hohen Anforderungen an Verschleißfestigkeit und/oder Korrosionsbeständigkeit genügt, handelt es sich bei der Gelenkkugel um eine nitrocarburierte Gelenkkugel. Aus vergleichbaren Gründen handelt es sich bei dem Gelenkschaft vorteilhaft um einen oberflächenbehandelten, insbesondere beschichteten Gelenkschaft.

Zur Schaffung einer günstigen Geometrie des Kugelzapfens kann die Gelenkkugel schaftseitig eine Polfläche aufweisen. Da der schaftseitige Bereich der Gelenkkugel nicht mit Kunststoffmaterial umspritzt wird, behindert eine schaftseitige Polfläche an der Gelenkkugel nicht die Beweglichkeit des Kugelzapfens.

Die eingangs genannte Aufgabe wird weiterhin gelöst durch ein Kugelgelenk nach Anspruch 4. Hierbei handelt es sich um ein Kugelgelenk, insbesondere für das Fahrwerk eines Fahrzeugs, mit einem Kugelzapfen der zuvor beschriebenen Art und einem den Kugelzapfen gelenkbeweglich aufnehmenden Gelenkgehäuse.

In vorteilhafter Weise handelt es sich bei dem Gelenkgehäuse um ein gegossenes, insbesondere spritzgegossenes Gelenkgehäuse.

Die eingangs genannte Aufgabe wird weiterhin gelöst durch ein Verfahren zur Herstellung eines Kugelgelenks gemäß Anspruch 6. Das Verfahren zur Herstellung des Kugelgelenks weist erfindungsgemäß die folgenden Schritte auf:
- Herstellen eines Kugelzapfens,
- Einlegen des Kugelzapfens in ein Gießwerkzeug,
- teilweises Umgießen der Gelenkkugel des Kugelzapfens mit einem Gussmaterial,
- Härten des Gussmaterials, um ein Gelenkgehäuse auszubilden.

Bei dem in dem Verfahren zuerst genannten Schritt des Herstellens eines Kugelzapfens ist insbesondere ein Kugelzapfen der zuvor beschriebenen Art gemeint.

Der Schritt des Herstellens des Kugelzapfens beinhaltet den Schritt des abschnittsweisen Einpressens des Gelenkschafts in das Sackloch der Gelenkkugel. Gemäß einer kinematischen Umkehr ist das Einpressen des Gelenkschafts in das Sackloch gleichzusetzen mit einem Aufpressen der Gelenkkugel auf den Gelenkschaft.

Vor dem Einpressen des Gelenkschafts erfolgt ein Nitrocarburieren der Gelenkkugel.

Auf vorteilhafte Weise wird vor dem Einpressen des Gelenkschafts eine zumindest bereichsweise Oberflächenbehandlung, insbesondere Beschichtung des Gelenkschafts vorgenommen.

Die eingangs genannte Aufgabe wird weiterhin gelöst durch ein Fahrwerksbauteil, insbesondere einen Lenker oder eine Koppelstange gemäß Anspruch 8. Ein derartiges Fahrwerksbauteil weist erfindungsgemäß einen Grundkörper auf, der mit wenigstens einem Kugelgelenk der zuvor beschriebenen Art verbunden ist.

Gemäß einer vorteilhaften Weiterbildung des Fahrwerksbauteils verbindet dabei das Gelenkgehäuse den Grundkörper mit dem Kugelgelenk.

Die Erfindung wird nachfolgend anhand eines in der Zeichnung dargestellten Ausführungsbeispiels näher beschrieben. Daraus ergeben sich auch weitere vorteilhafte Wirkungen der Erfindung. In der Zeichnung zeigt:
- Fig. 1: einen Kugelzapfen für ein Kugelgelenk gemäß einem Ausführungsbeispiel der Erfindung in schematischer Schnittdarstellung,
- Fig. 2: ein Kugelgelenk gemäß einem Ausführungsbeispiel der Erfindung in schematischer Darstellung.

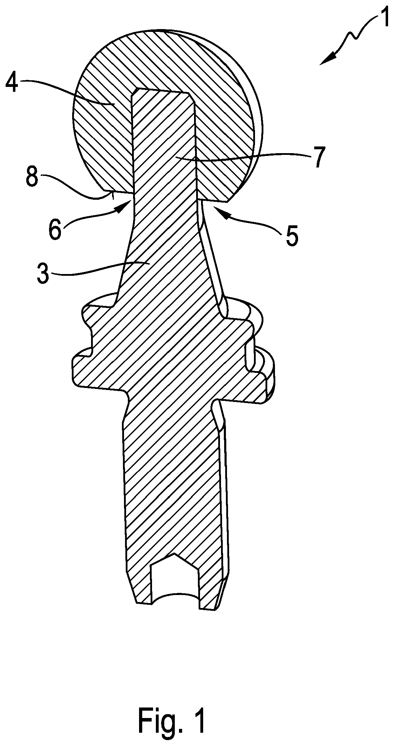

Figur 1 zeigt einen Kugelzapfen 1, der sich insbesondere zur Verwendung an einem Kugelgelenk am Fahrwerk eines Fahrzeugs eignet. Es handelt sich in Figur 1 um eine Schnittdarstellung, aus welcher hervorgeht, dass es sich um einen sogenannten gebauten Kugelzapfen 1 handelt, welcher nämlich aus einem Gelenkschaft 3 und einer Gelenkkugel 4 besteht. Bei dem Gelenkschaft 3 handelt es sich um ein im Wesentlichen längliches, metallisches Bauteil. In einem bezogen auf die Längserstreckung des Gelenkschafts 3 mittigen Bereich weist der Gelenkschaft seinen größten Durchmesser auf. Dieser Bereich bildet einerseits einen axialen Anschlag für ein mit dem Gelenkschaft 3 zu verbindendes Fahrwerksteil, wie beispielsweise einen Radträger, Achsträger, Stabilisator oder dergleichen. Weiterhin dient der mittige Bereich größten Durchmessers des Gelenkschafts 3 als Anlagebereich für einen (hier nicht dargestellten) Dichtungsbalg zur Abdichtung eines mit dem Kugelzapfen 1 herstellbaren Kugelgelenks.

Wie sich weiterhin Fig. 1 entnehmen lässt, verjüngt sich der Gelenkschaft 3 von seinem mittigen Bereich zu seinem der Gelenkkugel 4 zugewandten Ende hin. Im Endbereich des Gelenkschafts 3 ist an diesem ein Aufnahmeabschnitt 7 ausgebildet.

Bei der Gelenkkugel 4 handelt es sich um ein im Wesentlichen kugelförmiges Bauteil aus Stahl. Zur Erzielung einer hohen Verschleißfestigkeit sowie Korrosionsbeständigkeit ist die Gelenkkugel 4 bereits vor dem Zusammenbau mit dem Gelenkschaft 3 dem Verfahren des Nitrocarburierens unterzogen worden.

Abweichend von einer reinen Kugelform ist in der Gelenkkugel 4 auf der dem Gelenkschaft 3 zugewandten Seite einseitig eine Bohrung in Form eines Sacklochs 5 ausgebildet. Das Sackloch 5 erstreckt sich von einer Öffnung 6 zentral in die Gelenckugel 4 hinein bis über einen Mittelpunkt der Gelenkkugel 4 hinaus, endet jedoch vor Erreichen der dem Gelenkschaft 3 abgewandten Seite der Gelenkkugel 4.

Der Aufnahmeabschnitt 7 des Gelenkschafts 3 wird vollständig vom Sackloch 5 in der Gelenkkugel 4 aufgenommen. An der dem Gelenkschaft 3 zugewandten Seite der Gelenkkugel 4 weist die Gelenkkugel 4 einen abgeflachten Bereich im Sinne einer Polfläche 8 auf. Die Öffnung 6 des Sacklochs 5 liegt innerhalb der Polfläche 8, die Polfläche 8 erstreckt sich mit anderen Worten ringförmig um die Öffnung 6 herum.

Insbesondere im Bereich des Aufnahmeabschnitts 7 weist der Gelenkschaft 3 eine sich zum kugelseitigen Ende hin verjüngende Formgebung auf, insbesondere verjüngt sich der Gelenkschaft 3 in diesem Bereich konisch. Das Sackloch 5 in der Gelenkkugel 4 verjüngt sich ausgehend von seiner Öffnung 6 ebenfalls konisch. Gelenkschaft 3 und Gelenkkugel 4 sind form- und kraftschlüssig miteinander verbunden. Dazu sind Gelenkschaft 3 und Gelenkkugel 4 in Axialrichtung miteinander verpresst.

Die Ausbildung eines Sacklochs 5 in der Gelenkkugel 4 ermöglicht, dass die Gelenckugel 4 in ihrem dem Gelenkschaft 3 abgewandten Oberflächenbereich unterbrechungsfrei sphärisch ausgebildet ist. Diese Gestaltung ermöglicht vorteilhaft die Verwendung des Kugelzapfens 1 in Kombination mit einem durch Kunststoffspritzguss hergestellten Gelenkgehäuse.

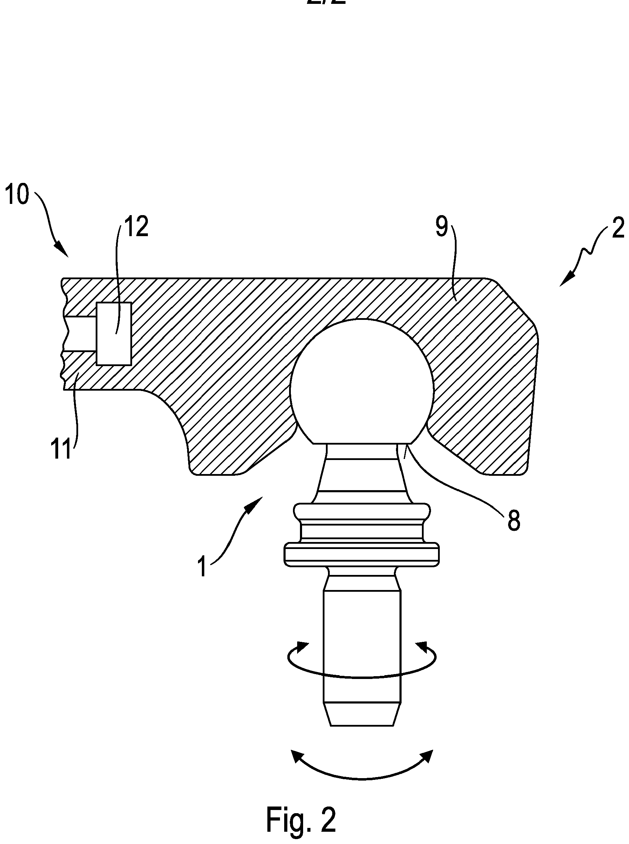

Figur 2 zeigt dazu beispielhaft in schematischer Darstellung ein Kugelgelenk 2, bei dem ein wie anhand von Figur 1 beschriebener Kugelzapfen 1 zur Anwendung kommt. Das Kugelgelenk 2 gemäß Figur 2 umfasst demnach den Kugelzapfen 1 sowie ein Gelenkgehäuse 9, das den Kugelzapfen 1 gelenkbeweglich aufnimmt. Es handelt sich bei dem Gelenkgehäuse 9 um ein durch Kunststoffspritzguss hergestelltes Gelenkgehäuse.

Zur Herstellung des Kugelgelenks 2 wird zunächst der Kugelzapfen 1 hergestellt. Dazu wird zunächst die Gelenkkugel 4 auf hier nicht näher zu beschreibende Weise hergestellt und durch Nitrocarburieren behandelt. Zudem wird der Gelenkschaft 3 auf hier nicht näher zu beschreibende Weise hergestellt, wobei zumindest bereichsweise eine Oberflächenbeschichtung vorgenommen wird. Anschließend werden Gelenkschaft 3 und Gelenkkugel 4 im Bereich des Sacklochs 5 miteinander in Eingriff gebracht und in Axialrichtung verpresst. Der Kugelzapfen 1 ist damit hergestellt.

Zur Herstellung des erfindungsgemäßen Kugelgelenks 2 erfolgt anschließend das Einlegen des Kugelzapfens 1 in ein (hier nicht dargestelltes) Gießwerkzeug, in welchem die Gelenkkugel 4 des Kugelzapfens 1 im Spritzgussverfahren teilweise mit einem Gussmaterial umspritzt wird. Nach dem Härten des Gussmaterials bildet dieses das Gelenkgehäuse 9 aus, welches die Gelenkkugel 4 bereichsweise umgibt und auf diese Weise den Kugelzapfen 1 gelenkbeweglich aufnimmt.

Auf vorteilhafte Weise kann das auf diese Weise hergestellte Kugelgelenk 2 entweder für sich genutzt werden oder als Bestandteil eines Fahrwerksbauteils, insbesondere eines Lenkers oder einer Koppelstange eingesetzt werden.

Wie in Figur 2 angedeutet, kann das Kugelgelenk 2 Teil eines Fahrwerksbauteils 10 sein, bei welchem es sich beispielsweise um eine Koppelstange in Bauform eines Zweipunktlenkers handelt. Das Fahrwerksbauteil kann auf unterschiedliche Weisen gestaltet sein. Ganz allgemein weist dieses einen Grundkörper auf, der mit dem Kugelgelenk 2 verbunden ist. Der Grundkörper kann auf verschiedene Weise gestaltet sein, beispielsweise handelt es sich um eine metallische Strebe in Form eines Einlegers 12, der wie in Figur 2 gezeigt, ebenfalls vom Gussmaterial des Gelenkgehäuses 9 umspritzt ist. In diesem Fall verbindet das Gelenkgehäuse 9 den Grundkörper des Fahrwerksbauteils 10 mit dem Kugelgelenk 2. Durch das gemeinsame Umspritzen von Gelenkkugel und Einleger 12 ist das Fahrwerksbauteil 10 in verhältnismäßig wenigen Arbeitsschritten und damit auf einfache Weise herstellbar. Zugleich weist dieses eine hohe Festigkeit, Verschleiß- sowie Korrosionsbeständigkeit auf.

### Bezugszeichen

- 1: Kugelzapfen
- 2: Kugelgelenk
- 3: Gelenkschaft
- 4: Gelenkkugel
- 5: Sackloch
- 6: Öffnung
- 7: Aufnahmeabschnitt
- 8: Polfläche
- 9: Gelenkgehäuse
- 10: Fahrwerkslenker
- 11: Anschlussbereich
- 12: Einleger

## Patentansprüche

1. Kugelzapfen (1) für ein Kugelgelenk (2) zum Einsatz am Fahrwerk eines Fahrzeugs, mit einem Gelenkschaft (3) und einer mit dem Gelenkschaft (3) verbundenen Gelenkkugel (4), wobei in der Gelenkkugel (4) ein Sackloch (5) ausgebildet ist, das den Gelenkschaft (3) abschnittsweise aufnimmt, und der Gelenkschaft (3) in das Sackloch (5) eingepresst ist und sich das Sackloch (5) von seiner Öffnung (6) ausgehend verjüngt, wobei ein am Gelenkschaft (3) ausgebildeter Aufnahmeabschnitt (7) eine zum Sackloch (5) komplementäre Formgebung aufweist **dadurch gekennzeichnet, dass** es sich um eine nitrocarburierte Gelenkkugel (4) aus Stahl handelt.

2. Kugelzapfen (1) nach einem der vorigen Ansprüche, **dadurch gekennzeichnet, dass** es sich um einen oberflächenbehandelten, insbesondere beschichteten Gelenkschaft (4) handelt.

3. Kugelzapfen (1) nach einem der vorigen Ansprüche, **dadurch gekennzeichnet, dass** die Gelenkkugel (4) schaftseitig eine Polfläche (8) aufweist.

4. Kugelgelenk (2) für ein Fahrwerk eines Fahrzeugs, mit einem Kugelzapfen (1) nach einem der vorigen Ansprüche und einem den Kugelzapfen (1) gelenkbeweglich aufnehmenden Gelenkgehäuse (9).

5. Kugelgelenk (2) nach Anspruch 4, **dadurch gekennzeichnet, dass** es sich um ein gegossenes, insbesondere spritzgegossenes Gelenkgehäuse (9) handelt.

6. Verfahren zur Herstellung eines Kugelgelenks nach einem der Ansprüche 4 oder 5, aufweisend die Schritte:
- Herstellen eines Kugelzapfens (1), wobei der Schritt des Herstellens des Kugelzapfens (1) den Schritt des abschnittsweisen Einpressens des Gelenkschafts (3) in das sich verjüngende Sackloch (5) der Gelenkkugel beinhaltet,
- Einlegen des Kugelzapfens in ein Gießwerkzeug,
- teilweises Umgießen der Gelenkkugel (4) des Kugelzapfens (1) mit einem Gussmaterial,
- Härten des Gussmaterials, um ein Gelenkgehäuse (9) auszubilden
- Nitrocarburieren der Gelenkkugel (4) vor dem Einpressen des Gelenkschafts (3).

7. Verfahren nach Anspruch 6, **dadurch gekennzeichnet, dass** vor dem Einpressen des Gelenkschafts (3) eine zumindest bereichsweise Oberflächenbehandlung, insbesondere Beschichtung des Gelenkschafts (3) vorgenommen wird.

8. Fahrwerksbauteil (10), insbesondere Lenker oder Koppelstange, aufweisend einen Grundkörper (12), der mit wenigstens einem Kugelgelenk (2) nach einem der Ansprüche 4 oder 5 verbunden ist.

9. Fahrwerksbauteil (10) nach Anspruch 8, **dadurch gekennzeichnet, dass** das Gelenkgehäuse (9) den Grundkörper (12) mit dem Kugelgelenk (2) verbindet.

## Claims

1. Ball stud (1) for a ball joint (2) for use on the chassis of a vehicle, with a joint shaft (3) and a joint ball (4) connected to the joint shaft (3), wherein a blind hole (5) is formed in the joint ball (4), the blind hole (5) receiving sections of the joint shaft (3), and the joint shaft (3) is pressed into the blind hole (5), and the blind hole (5) tapers from its opening (6), wherein a receiving section (7) formed on the joint shaft (3) has a complementary shaping to the blind hole (5), **characterized in that** a nitrocarburized joint ball (4) made from steel is involved.

2. Ball stud (1) according to one of the preceding claims, **characterized in that** a surface-treated, in particular coated, joint shaft (4) is involved.

3. Ball stud (1) according to either of the preceding claims, **characterized in that** the joint ball (4) has a pole face (8) on the shaft side.

4. Ball joint (2) for a chassis of a vehicle, with a ball stud (1) according to one of the preceding claims and with a joint housing (9) receiving the ball stud (1) in an articulated manner.

5. Ball joint (2) according to Claim 4, **characterized in that** a cast, in particular injection-moulded, joint housing (9) is involved.

6. Method for producing a ball joint according to either of Claims 4 and 5, comprising the steps of:
- producing a ball stud (1), wherein the step of producing the ball stud (1) includes the step of pressing sections of the ball shaft (3) into the tapering blind hole (5) of the joint ball,
- placing the ball stud into a casting mould,
- partially casting a casting material around the joint ball (4) of the ball stud (1),
- hardening the casting material in order to form a joint housing (9),
- nitrocarburizing the joint ball (4) before the joint shaft (3) is pressed in.

7. Method according to Claim 6, **characterized in that**, before the joint shaft (3) is pressed in, a surface treatment, in particular coating of the joint shaft (3), is carried out at least in regions.

8. Chassis component (10), in particular link or coupling rod, having a basic body (12) which is connected to at least one ball joint (2) according to either of Claims 4 and 5.

9. Chassis component (10) according to Claim 8, **characterized in that** the joint housing (9) connects the basic body (12) to the ball joint (2).

## Revendications

1. Pivot à rotule (1) destiné à une articulation à rotule (2) destinée à être utilisée sur le mécanisme de roulement d'un véhicule, ledit pivot comprenant une tige d'articulation (3) et une rotule d'articulation (4) reliée à la tige d'articulation (3), un trou borgne (5) étant ménagé dans la rotule d'articulation (4) et recevant la tige d'articulation (3) par portions, et la tige d'articulation (3) étant enfoncée dans le trou borgne (5) et le trou borgne (5) se rétrécissant à partir de son ouverture (6), une portion de réception (7) formée au niveau de la tige d'articulation (3) ayant une forme complémentaire de celle du trou borgne (5), **caractérisée en ce que** la rotule d'articulation (4) est une rotule d'articulation nitrocarburée (4) en acier.

2. Pivot à rotule (1) selon l'une des revendications précédentes, **caractérisé en ce que** la tige d'articulation (4) est une tige d'articulation (4) traitée en surface, notamment pourvue d'un revêtement.

3. Pivot à rotule (1) selon l'une des revendications précédentes, **caractérisé en ce que** la rotule d'articulation (4) comporte une face polaire (8) du côté de la tige.

4. Articulation à rotule (2) destinée à un mécanisme de roulement d'un véhicule, ladite articulation comportant un pivot à rotule (1) selon l'une des revendications précédentes et un boîtier d'articulation (9) recevant de manière articulée le pivot à rotule (1).

5. Articulation à rotule (2) selon la revendication 4, **caractérisée en ce que** le boîtier d'articulation (9) est un boîtier d'articulation (9) moulé, notamment moulé par injection.

6. Procédé de fabrication d'une articulation à rotule selon l'une des revendications 4 ou 5, le procédé comprenant les étapes suivantes :
- fabriquer un pivot à rotule (1), l'étape de fabrication du pivot à rotule (1) incluant l'étape d'enfoncement de la tige d'articulation (3) par portions dans le trou borgne (5), qui se rétrécit, de la rotule d'articulation,
- insérer le pivot à rotule dans un outil de moulage,
- mouler partiellement un matériau de moulage autour de la rotule d'articulation (4) du pivot à rotule (1),
- faire durcir le matériau de moulage pour former un boîtier d'articulation (9)
- nitrocarburer la rotule d'articulation (4) avant d'enfoncer le pivot d'articulation (3).

7. Procédé selon la revendication 6, **caractérisé en ce qu'**un traitement de surface, en particulier un revêtement de la tige d'articulation (3), est réalisé au moins par endroits avant d'enfoncer la tige d'articulation (3).

8. Elément structurel (10), en particulier bielle ou barre d'accouplement, du mécanisme de roulement, ledit élément structurel comportant un corps de base (12) qui est relié à au moins une articulation à rotule (2) selon l'une des revendications 4 ou 5.

9. Elément structurel (10) du mécanisme de roulement selon la revendication 8, **caractérisé en ce que** le boîtier d'articulation (9) relie le corps de base (12) à l'articulation à rotule (2).
